# EUROPEAN PATENT SPECIFICATION

(11) **EP 2 477 374 B1**
(45) Date of publication and mention of the grant of the patent: **15.04.2020**
(21) Application number: 11789076.4
(22) Date of filing: 18.02.2011
(51) Int. Cl.: H04L 29/06, H04L 29/08

(54) **SERVICE DEVELOPMENT PLATFORM, SYSTEM AND METHOD THEREOF**
DIENSTENTWICKLUNGSPLATTFORM SOWIE SYSTEM UND VERFAHREN DAFÜR
PLATEFORME DE DÉVELOPPEMENT DE SERVICE, SYSTÈME ET PROCÉDÉ CORRESPONDANTS

(30) Priority: 01.06.2010 CN 201010191651
(43) Date of publication of application: 18.07.2012
(73) Proprietor: ZTE Corporation, Shenzhen, Guangdong 518057 (CN)
(72) Inventor: LIAO, Kai, Guangdong 518057 (CN); WANG, Dong, Guangdong 518057 (CN); ZUO, Xi, Guangdong 518057 (CN)
(74) Representative: Baudler, Ron
(86) International application number: PCT/CN2011/071088
(87) International publication number: WO 2011/150697

(56) References cited:
- EP-A2- 1 385 310
- CN-A- 101 131 747
- CN-A- 101 399 828
- US-A1- 2006 120 410
- US-A1- 2008 034 035

## Description

### Technical Field

The present invention relates to a service development platform, system and method, and particularly, to the implementation of video service development and flow control in the mobile communication and broadband communication.

### Background of the Related Art

In the conventional service mode, service logic is controlled mainly by an application server, and the play of audio or video resources is completed by a media server.

When a terminal user dials service access codes, the application server sends a media play request to the media server and plays a preset audio or video file for the user; the user triggers a key operation according to the received audio or video prompt; when the media server receives the key information of the user, it reports the key information of the user to the application server; and the application server selects the corresponding audio or video file according to the key information of the user and the preset service control logic, and sends the media play request to the media server again.

Therefore, in the process of executing the conventional service, the application server and the media server will generate a large amount of signaling interaction. Furthermore, in the process of development of the conventional service, it is required to make a large number of audio or video files and customize complicated service control logic, which is disadvantageous for the rapid development and deployment of new services. The conventional service development mode is to be further improved and developed.

US 2008/0034035 A1 discloses techniques for providing an audibly controlled interface for a user of a limited audio-based communication device, for example, a telephony device such as a desktop telephone or a cellular telephone. The communication device has an interface connection with a proxy browser. The user initially accesses the device, such as by picking up the handset, and the proxy browser provides a communication path over a network to a call services application on an application server. The application server provides a response to the initial access signal. The proxy browser receives the response from the application server and plays back an audio output based on the response to the communication device for the user. The user can then respond with a request to the call services application to place an outbound call or to initiate another service provided by the application server via the proxy browser.

### Content of the Invention

The technical problem to be solved by the present invention is to provide a service development platform, system and method according to appended independent claims, so as to simplify the development and extension of services, make it convenient for the operators or service providers to complete the deployment of new services more effectively and more rapidly, improve the development efficiency for making video material, and solve the film source resource problem in the video service. Further improvements and embodiments are provided in the dependent claims.

Also provided is a service development method, comprising: a service development platform processing a service request of a user equipment (UE),
the UE dialing service access codes, and initiating the service request;
the service development platform establishing a media channel with the UE;
the service development platform loading a WEB page on a WEB browser according to the service request of the UE;
the service development platform capturing data of the WEB page on the WEB browser and sending the captured data of the WEB page after encapsulation to the UE through the media channel; and
the service development platform receiving key information of the UE through the media channel, and sending the key information of the UE to the WEB browser in manner of a windows message, so as to realize an operation on the WEB page.

Preferably, a plurality of WEB browsers run on the service development platform;
the method further comprises: the service development platform allocating a media resource to the UE which initiates the service request, wherein the step of allocating comprises allocating an idle WEB browser to the UE;
the service development platform establishes the media channel with the UE according to the media resource allocated to the UE;
the service development platform loads the WEB page on the WEB browser allocated to the UE;
the service development platform captures the data of the WEB page on the WEB browser allocated to the UE; and
the service development platform sends the key information of the UE to the WEB browser allocated to the UE.

Preferably, when establishing the media channel with the UE, the service development platform further negotiates an audio/video media type and an encoding type; and
the data of the WEB page captured by the service development platform comprises audio/video data; after capturing the data of the WEB page, the service development platform encapsulates the captured data of the WEB page into an RTP package according to the negotiated audio/video media type and encoding type and then sends to the UE through the media channel.

Preferably, an application server receives the service request of the UE through a video gateway, and then initiates a link establishment request toward the service development platform;
the service development platform establishes a link with the application server; and
the service development platform carries out a signaling interaction with the UE through the application server, allocates the media resource to the UE, establishes the media channel with the UE, and negotiates the audio/video media type and the encoding type.

Preferably, after allocating the idle WEB browser to the UE, the service development platform further maintains a corresponding relation between the UE and the WEB browser; and
the application server further judges a service type according to the service request of the UE, and sends a request of loading a WEB page corresponding to a service requested by the UE to the service development platform after establishing the link with the service development platform; and after receiving the request of loading the WEB page corresponding to the service requested by the UE, the service development platform, according to the corresponding relation, loads the WEB page corresponding to the service requested by the UE on the WEB browser allocated to the UE.

Preferably, after receiving a service finish request of the UE sent from the application server, the service development platform, according to the corresponding relation, stops capturing audio/video on the WEB browser allocated to the UE, releases the occupied resource, and deletes the corresponding relation; and/or
after receiving a service pause request of the UE sent from the application server, the service development platform, according to the corresponding relation, stops capturing audio/video on the WEB browser allocated to the UE.

Preferably, the service development platform hitches a system sound play function when running the WEB browser, and the service development platform captures audio data by the system sound play function; and
the service development platform captures video data by carrying out screen copy on a screen area of the WEB page.

Preferably, the service development platform further monitors a running state and a service state of the WEB browser, and when detecting that the running of the WEB browser is abnormal, restarts the WEB browser; and when detecting that the service is overtime, releasing the occupied resource.

Preferably, the service development platform further comprises an audio/video message,
the service development platform records the audio and video data sent from the UE and stores to a local; and the audio and video data are sent to the service development platform by the UE through the media channel.

Also provided is a service development platform, comprising a control module and a WEB browser process module, wherein,
the control module is configured to: establish a media channel with a user equipment (UE) which initiates a service request; and
the WEB browser process module is configured to: load a WEB page on a WEB browser according to the service request of the UE; capture data of the WEB page on the WEB browser, and sends the captured data of the WEB page after encapsulation to the UE through the media channel established by the control module; and receive key information of the UE through the media channel, and send the key information to the UE to the WEB browser in manner of a windows message, so as to realize an operation on the WEB page.

Preferably, the WEB browser process module is further configured to run a plurality of WEB browsers;
the WEB browser process module is configured to: load the WEB page on the WEB browser allocated to the UE, capture the data of the WEB page on the WEB browser allocated to the UE, and send the key information of the UE to the WEB browser allocated to the UE;
the control module is configured to: allocate a media resource to the UE which initiates the service request, comprising allocating an idle state WEB browser;
the control module is configured to: establish the media channel with the UE according to the media resource allocated to the UE.

Preferably, the control module is further configured to: when establishing the media channel with the UE, negotiate an audio/video media type and an encoding type;
the WEB browser process module is further configured to: comprise audio/video data in the data captured on the WEB page; and
the WEB browser process module is configured to: after capturing the data of the WEB page, encapsulate the captured data of the WEB page into an RTP package according to the negotiated audio/video media type and encoding type and then send to the UE through the media channel.

Preferably, the control module is further configured to: after receiving a link establishment request sent from an application server, establish a link with the application server, carry out a signaling interaction with the UE which initiates the service request through the application server, allocate the media resource to the UE, establish the media channel, and negotiate the audio/video media type and the encoding type.

Preferably, the control module is further configured to: when allocating the idle state WEB browser to the UE, maintain a corresponding relation between the UE and the allocated WEB browser;
the control module is configured to: after receiving a request of loading a WEB page corresponding to a service requested by the UE, which is sent from the application server, forward, according to the corresponding relation, the load request to the WEB browser allocated to the UE on the WEB browser process module, so that the WEB browser loads the WEB page corresponding to the service requested by the UE according to the request.

Preferably, the control module is further configured to: after receiving a service finish request of the UE sent from the application server, forward, according to the corresponding relation, the service finish request of the UE to the WEB browser allocated to the UE on the WEB browser process module, and delete the corresponding relation; and the WEB browser process module is further configured to: after receiving the service finish request of the UE, stop capturing audio/video on the WEB browser allocated to the UE, release the occupied resource, and reset the WEB browser allocated to the UE as an idle state; and/or
the control module is further configured to: after receiving a service pause request of the UE sent from the application server, forward, according to the corresponding relation, the service pause request of the UE to the WEB browser allocated to the UE on the WEB browser process module; and the WEB browser process module is further configured to: after receiving the service pause request of the UE, stop capturing audio/video on the WEB browser allocated to the UE.

Preferably, the WEB browser process module is further configured to: when running the WEB browser, hitch a system sound play function; and
the WEB browser process module is configured to: capture audio data by the system sound play function; and capture video data by carrying out screen copy on a screen area of the WEB page.

The control module is further configured to: monitor a running state and a service state of the WEB browser running in the WEB browser process module, and when detecting that the running of the WEB browser is abnormal, restart the WEB browser; and when detecting that the service is overtime, release the occupied resource.

Preferably, the WEB browser process module is further configured to: receive audio and video data sent from the UE through the media channel, record the data and store to a local.

Preferably, the WEB browser process module comprises an audio data capturing unit, an audio data sending unit, an audio data buffering unit, a video data capturing unit, a video data sending unit, a video data buffering unit, and a receiving package processing unit, wherein,
the audio data capturing unit is configured to capture audio data on the WEB page;
the audio data buffering unit is configured to buffer the audio data captured by the audio data capturing unit;
the audio data sending unit is configured to: encapsulate the audio data buffered by the audio data buffering unit after encoding processing into an RTP data package, and then send to the UE through the media channel with the UE;
the video data capturing unit is configured to capture video data on the WEB page;
the video data buffering unit is configured to buffer the video data captured by the video data capturing unit;
the video data sending unit is configured to: encapsulate the video data buffered by the video data buffering unit after encoding processing into an RTP data package, and then send to the UE through the media channel with the UE; and
the receiving package processing unit is configured to: receive an operation information of the UE and send to the WEB browser in manner of a windows message, so as to perform the operation on the WEB page.

Preferably, the receiving package processing unit is further configured to: receive an instruction sent from the control module and send to the WEB browser; wherein, the instruction comprises an instruction of loading a WEB page corresponding to a service requested by the UE, an instruction of a WEB page corresponding to a service pause request of the UE, and an instruction of a WEB page corresponding to a service finish request of the UE.

Preferably, the service development platform further comprises a record unit, which is configured to record audio and video data sent from the UE and store to a local.

Also provided is a service development system, comprising a video gateway, an application server, a WEB server, and a service development platform as claimed in any one of claims 7-14, wherein,
the application server is configured to: receive a service request of a user through the video gateway, judge a service type, establish a link with the service development platform, and send a request of loading a WEB page corresponding to a service requested by the UE to the service development platform;
the service development platform is configured to: carry out a signaling interaction with the UE through the application server, establish a media channel with the UE; interact with the WEB server, load the WEB page on a WEB browser according to the service request of the UE; capture data of the WEB page on the WEB browser, sends the data after encapsulation to the UE through the media channel; receive key information sent from the UE through the media channel, and send the key information of the UE to the WEB browser in manner of a windows message, so as to realize an operation on the WEB page; and
the WEB server is configured to provide the WEB page corresponding to the service requested by the user.

The present invention provides the service development platform, system and method, which artfully converts the conventional service logic controlled by the application server into achieving the service logic control by the jump function of the WEB page, greatly reducing the signaling interaction with the application server, enhancing the service response speed, simplifying the development and extension of the service, being convenient for the operators or service providers to complete the deployment of new services more efficiently and more rapidly.

### Brief Description of Drawings

FIG. 1 is a flow chart of a service development method according to an embodiment of the present invention;
FIG. 2 is a schematic diagram of an internal structure of a service development platform according to an embodiment of the present invention;
FIG. 3 is a schematic diagram of an internal structure of a WEB browser process module according to an embodiment of the present invention;
FIG. 4 is a schematic diagram of a composition of a service development system according to an embodiment of the present invention; and
FIG. 5 is a schematic diagram of a composition of a service development system according to an application example of the present invention.

### Preferred Embodiments of the Present Invention

The present invention provides a service development platform, system and method, and the basic concept thereof is that: a service development platform processes a service request of the UE, including: establishing a media channel with the UE; loading a WEB page on a WEB browser according to the service request of the UE; capturing data of the WEB page on the above WEB browser and sending the captured data of the WEB page after encapsulation to the UE through the media channel; and receiving key information of the UE through the media channel, and sending the key information of the UE to the WEB browser in manner of a windows message, so as to realize an operation on the WEB page. By adopting this solution, service development in manner of the WEB page can be artfully realized, which avoids fussily making a large number of video files, making video material is completed by making the web page, and the development efficiency of the video material is enhanced; moreover, various web page types and technologies can be supported, the WEB page and the embedded sound therein can be converted into standard audio/video streams, which significantly solves the film source resource problem in the video service.

Hereinafter, the embodiments of the present invention will be illustrated in detail in combination with the accompanying drawings.

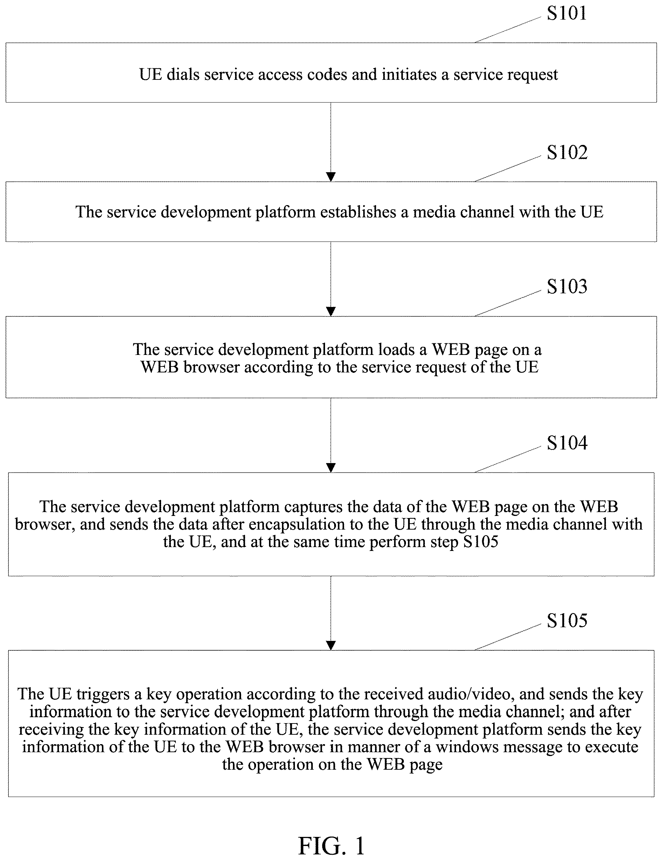

Referring to FIG. 1, it shows a service development method according to an embodiment of the present invention, and the service development can be artfully realized based on WEB by processing a service request of the UE by a service development platform of the present invention, which includes the following steps.

In step S101: the UE dials service access codes and initiates the service request.

In step S102: the service development platform establishes the media channel with the UE.

Preferably, a plurality of WEB browsers can run on the service development platform. Specifically, when the service development platform starts up, a certain number of WEB browser processes can be started up, these WEB browser windows are arranged on a virtual desktop in turn, and information, such as window handle, size, coordinate location, etc., of each process is recorded. Wherein, the virtual desktop needs to be installed with a virtual display card driver.

The service development platform also allocate a media resource to the UE which initiates the service request, including allocating a port number, an IP address, an idle WEB browser, etc., to the UE. The service development platform establishes the media channel with the UE according to the media resource allocated to the UE.

In step 103: the service development platform loads the WEB page on the WEB browser according to the service request of the UE.

Preferably, when a plurality of WEB browsers run on the service development platform, the requests of a plurality of users can be processed in parallel, that is, the service development platform respectively loads a WEB page corresponding to a service requested by the UE on the WEB browser allocated to each UE according to the service request of each UE.

In step S104: the service development platform captures the data of the WEB page on the WEB browser, and sends the data after encapsulation to the UE through the media channel with the UE, and at the same time step S105 is performed.

The data of the WEB page captured by the service development platform includes audio/video data. When the service development platform establishes the media channel with the UE, it also negotiates an audio/video media type and an encoding type; and after capturing the data on the WEB page, the service development platform encapsulates the data into an RTP package according to the negotiated audio/video media type and encoding type and then sends to the UE through the media channel.

The following manner can be adopted to realize that the service development platform captures the data of the WEB page: the service development platform can hitch a system sound play function when running the WEB browser, and capture the audio data through the system sound play function. The service development platform can carry out screen copy on a screen area in which a WEB browser window is located to capture the video data.

In step S105: the UE triggers a key operation according to the received audio/video, and sends the key information to the service development platform through the media channel; and after receiving the key information of the UE, the service development platform sends the key information of the UE to the WEB browser in manner of a windows message, to execute the operation on the WEB page.

The operation of the WEB page can include user information input or triggering the jump of the WEB page.

Preferably, in order to ensure the normal operation of the service, the service development platform can also monitor a running state and a service state of the WEB browser, and when detecting that the running of the WEB browser is abnormal, restarts the WEB browser; and when detecting that the service is overtime, releasing the occupied resource. The service being overtime may be caused by the reason such as the network, etc.

Preferably, the service development platform of the present invention can also provide an audio/video message function, including: the UE can send the audio and video data to the service development platform through the media channel; and the service development platform records the audio and video data sent from the UE and stores the same to a local.

In the embodiment of the present invention, during the practical implementation, the participation of intermediate devices, such as an application server and an audio/video gateway is needed. Specifically, the application server receives the service request of the UE through the video gateway, judges the service type according to the service request of the user, and initiates a link establishment request to the service development platform; and the service development platform establishes a link with the application server. Then, the service development platform carries out a signaling interaction with the UE through the application server, allocates the media resource to the UE, establishes the media channel with the UE, and negotiates the audio/video media type and the encoding type.

Preferably, for the situation that several WEB browsers run on the service development platform and can process the service requests of a plurality of users in parallel, the service development platform, after allocating the idle WEB browser to the UE, also maintains a corresponding relation between the UE and the WEB browser. The application server further judges a service type according to the service request of the UE, and sends a request of loading a WEB page corresponding to a service requested by the UE to the service development platform after establishing the link with the service development platform; and after receiving the request of loading the WEB page corresponding to the service requested by the UE, the service development platform, according to the corresponding relation, loads the WEB page corresponding to the service requested by the UE on the WEB browser allocated to the UE.

Preferably, the application server can also send a service finish request of the UE to the service development platform. After receiving the service finish request of the UE, the service development platform, according to the corresponding relation, stops capturing audio/video on the WEB browser allocated to the UE, releases the occupied resource, and deletes the corresponding relation.

Preferably, the application server can also send a service pause request of the UE to the service development platform; and after receiving the service pause request of the UE, the service development platform, according to the corresponding relation, stops capturing audio/video on the WEB browser allocated to the UE.

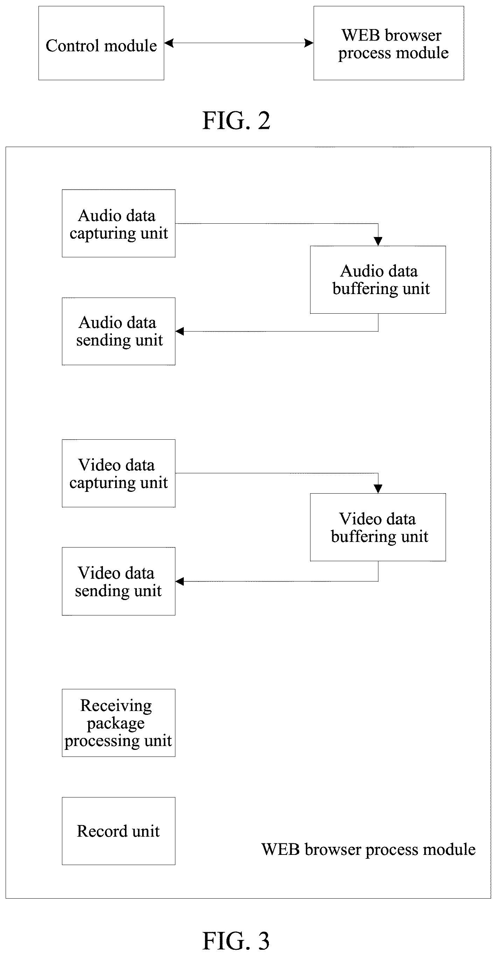

In order to realize the above method, an embodiment of the present invention also provides a service development platform, and as shown in FIG. 2, it includes a control module and a WEB browser process module, wherein,
the control module is configured to: establish a media channel with a user equipment (UE) which initiates a service request; and
the WEB browser process module is configured to: load a WEB page on a WEB browser according to the service request of the UE; capture data of the WEB page on the WEB browser, and sends the captured data of the WEB page after encapsulation to the UE through the media channel established by the control module; and receive key information of the UE through the media channel, and send the key information to the UE to the WEB browser in manner of a windows message, so as to realize an operation on the WEB page.

Preferably, several WEB browsers run on the WEB browser process module; the WEB browser process module loads the WEB page on the WEB browser allocated to the UE, captures the data of the WEB page on the WEB browser allocated to the UE, and sends the key information of the UE to the WEB browser allocated to the UE. The control module also allocates a media resource to the UE which initiates the service request, including allocating an idle state WEB browser to the UE; and the control module establishes the media channel with the UE according to the media resource allocated to the UE.

Preferably, the control module also negotiates the audio/video media type and the encoding type when establishing the media channel with the UE. The data captured on the WEB page by the WEB browser process module comprises the audio/video data; after capturing the data of the WEB page, the WEB browser process module encapsulates the data into an RTP package according to the negotiated audio/video media type and encoding type and then sends to the UE through the media channel.

Preferably, the control module, after receiving a link establishment request sent from the application server, establishes a link with the application server, carries out a signaling interaction with the UE which initiates the service request through the application server, allocates the media resource to the UE, establish the media channel, and negotiates the audio/video media type and the encoding type.

Preferably, the control module also maintains a corresponding relation between the UE and the WEB browser allocated to the UE when allocating the idle state WEB browser to the UE. The control module, after receiving a request of loading a WEB page corresponding to a service requested by the UE, which is sent from the application server, forwards, according to the corresponding relation, the request to the WEB browser allocated to the UE on the WEB browser process module, so that the WEB browser loads the WEB page corresponding to the service requested by the UE according to the request.

Preferably, after eceiving a service finish request of the UE sent from the application server, the control module forwards, according to the corresponding relation, the same to the WEB browser allocated to the UE on the WEB browser process module, and deletes the corresponding relation; and after receiving the service finish request of the UE, the WEB browser process module stops capturing audio/video on the WEB browser allocated to the UE, releases the occupied resource, and resets the WEB browser allocated to the UE as an idle state; and/or
after receiving a service pause request of the UE sent from the application server, the control module forwards, according to the corresponding relation, the service pause request of the UE to the WEB browser allocated to the UE on the WEB browser process module; and after receiving the service pause request of the UE, the WEB browser process module stops capturing audio/video on the WEB browser allocated to the UE.

Preferably, the WEB browser process module also hitches a system sound play function when running the WEB browser; and the WEB browser process module captures audio data through the system sound play function. The WEB browser process module captures the video data by carrying out screen copy on a screen area of the WEB page.

Preferably, the control module is further configured to: monitor a running state and a service state of the WEB browser running in the WEB browser process module, and when detecting that the running of the WEB browser is abnormal, restart the WEB browser; and when detecting that the service is overtime, release the occupied resource.

Preferably, the WEB browser process module also receives the audio and video data sent from the UE through the media channel, records the same and stores the same to a local.

Preferably, referring to FIG. 3, the WEB browser process module can also be divided to include an audio data capturing unit, an audio data sending unit, an audio data buffering unit, a video data capturing unit, a video data sending unit, a video data buffering unit, a receiving package processing unit and a record unit, wherein,
the audio data capturing unit is configured to capture audio data on the WEB page;
the audio data buffering unit is configured to buffer the audio data captured by the audio data capturing unit;
the audio data sending unit is configured to: encapsulate the audio data buffered by the audio data buffering unit after encoding processing into an RTP data package, and then send to the UE through the media channel with the UE;
the video data capturing unit is configured to capture video data on the WEB page;
the video data buffering unit is configured to buffer the video data captured by the video data capturing unit;
the video data sending unit is configured to: encapsulate the video data buffered by the video data buffering unit after encoding processing into an RTP data package, and then send to the UE through the media channel with the UE; and
the receiving package processing unit is configured to: receive an operation information of the UE and send to the WEB browser in manner of a windows message, so as to perform the operation on the WEB page. The receiving package processing unit is further configured to receive an instruction sent from the control module and send the same to the WEB browser, and wherein the instruction comprises an instruction of loading a WEB page corresponding to a service requested by the UE, a service pause request of the UE, and a service finish request of the UE, and so on.

Preferably, when the service development platform provides an audio/video message function, it also includes a record unit, for recording the audio and video data sent from the UE and storing the same to the local.

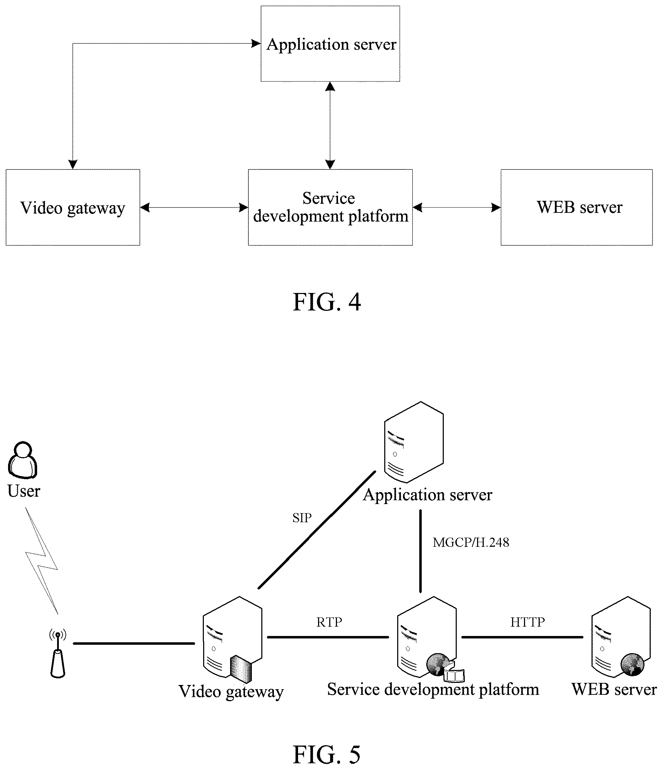

Referring to FIG. 4, it shows a service development system according to an embodiment of the present invention, which at least includes a service development platform with the above functions, a video gateway, an application server and a WEB server, wherein,
the application server is configured to: receive a service request of a user through the video gateway, judge a service type, establish a link with the service development platform, and send a request of loading a WEB page corresponding to a service requested by the UE to the service development platform;
the service development platform is configured to: carry out a signaling interaction with the UE through the application server, establish a media channel with the UE; interact with the WEB server, load the WEB page on a WEB browser according to the service request of the UE; capture data of the WEB page on the WEB browser, sends the data after encapsulation to the UE through the media channel; receive key information sent from the UE through the media channel, and send the key information of the UE to the WEB browser in manner of a windows message, so as to realize an operation on the WEB page; and
the WEB server is configured to provide the WEB page corresponding to the service requested by the user.

Referring to FIG. 5, it shows a specific process of various components of the service development system of an embodiment of the present invention interacting with each other to provide a service to a user: the service development platform communicates with the application server through the media gateway control protocol (MGCP) or H.248 protocol, and accesses the WEB service through the HTTP protocol. When the terminal user dials service access codes, the video gateway receives a request and initiates an SIP calling request to the application server; the application server judges the service type according to the service access codes dialed by the terminal user, and initiates a link establishment request to the service development platform through the MGCP or H.248 protocol; then the service development platform allocates the audio/video media resource to the UE, and negotiates the audio/video encoding type; after the link is established successfully, the application server requests the service development platform to load a predetermined web page according to the service type; when the service development platform loads the web page successfully, it triggers a screen capture and audio capture process, acquires audio/video original data, carries out encoding processing on the original data according to the previously negotiated audio/video encoding type, and encapsulates the same into an RTP package to be sent to the video gateway. The video gateway multiplexes the audio/video data into H.324M streams to be sent to the UE side.

It needs to be illustrated that, the above description regarding to the embodiments of the present invention is relatively detailed and particular, but it is not regarded as a limit to the protection scope of the present patent. It is apparent for those skilled in the art to make various changes to the present invention without departing from the teaching and scope of the present invention. Therefore, the present invention is intended to contain various changes within the scope of the present invention, and the protection scope of the patent should be based on the appended claims.

### Industrial Applicability

The present invention provides the service development platform, system and method, which artfully converts the conventional service logic controlled by the application server into achieving the service logic control by the jump function of the WEB page, greatly reducing the signaling interaction with the application server, enhancing the service response speed, simplifying the development and extension of the service, being convenient for the operators or service providers to complete the deployment of new services more efficiently and more rapidly.

## Claims

1. A service development method, comprising: a service development platform processing a service request of a user equipment (UE),
the UE dialing service access codes, and initiating the service request;
the service development platform establishing a media channel with the UE;
the service development platform loading a WEB page on a WEB browser according to the service request of the UE;
the service development platform capturing data of the WEB page on the WEB browser and sending the captured data of the WEB page after encapsulation to the UE through the media channel; and
the service development platform receiving key information of the UE through the media channel, and sending the key information of the UE to the WEB browser in manner of a windows message, so as to realize an operation on the WEB page;
wherein, a plurality of WEB browsers run on the service development platform;
the method further comprises: the service development platform allocating a media resource to the UE which initiates the service request, wherein the step of allocating comprises allocating an idle WEB browser to the UE;
when establishing the media channel with the UE, the service development platform further negotiates an audio/video media type and an encoding type; and
the data of the WEB page captured by the service development platform comprises audio/video data; after capturing the data of the WEB page, the service development platform encapsulates the captured data of the WEB page into an RTP package according to the negotiated audio/video media type and encoding type and then sends to the UE through the media channel.

2. The method as claimed in claim 1, wherein,
the service development platform establishes the media channel with the UE according to the media resource allocated to the UE;
the service development platform loads the WEB page on the WEB browser allocated to the UE;
the service development platform captures the data of the WEB page on the WEB browser allocated to the UE; and
the service development platform sends the key information of the UE to the WEB browser allocated to the UE.

3. The method as claimed in claim 1, further comprising:
an application server receiving the service request of the UE through a video gateway, and then initiating a link establishment request toward the service development platform;
the service development platform establishing a link with the application server; and
the service development platform carrying out a signaling interaction with the UE through the application server, allocating the media resource to the UE, establishing the media channel with the UE, and negotiating the audio/video media type and the encoding type.

4. The method as claimed in claim 3, wherein,
after allocating the idle WEB browser to the UE, the service development platform further maintains a corresponding relation between the UE and the WEB browser; and
the application server further judges a service type according to the service request of the UE, and sends a request of loading a WEB page corresponding to a service requested by the UE to the service development platform after establishing the link with the service development platform; and after receiving the request of loading the WEB page corresponding to the service requested by the UE, the service development platform, according to the corresponding relation, loads the WEB page corresponding to the service requested by the UE on the WEB browser allocated to the UE.

5. The method as claimed in claim 1, wherein,
the service development platform hitches a system sound play function when running the WEB browser, and the service development platform captures audio data by the system sound play function; and
the service development platform captures video data by carrying out screen copy on a screen area of the WEB page; or
wherein, the service development platform further monitors a running state and a service state of the WEB browser, and when detecting that the running of the WEB browser is abnormal, restarts the WEB browser; and when detecting that the service is overtime, releasing the occupied resource; or
wherein, the service development platform further comprises an audio/video message,
the service development platform records the audio and video data sent from the UE and stores to a local; and the audio and video data are sent to the service development platform by the UE through the media channel.

6. A service development platform, comprising a control module and a WEB browser process module, wherein,
the control module is configured to: establish a media channel with a user equipment (UE) which initiates a service request; and
the WEB browser process module is configured to: load a WEB page on a WEB browser according to the service request of the UE; capture data of the WEB page on the WEB browser, and sends the captured data of the WEB page after encapsulation to the UE through the media channel established by the control module; and receive key information of the UE through the media channel, and send the key information of the UE to the WEB browser in manner of a windows message, so as to realize an operation on the WEB page;
wherein, the WEB browser process module is further configured to run a plurality of WEB browsers;
the control module is configured to: allocate a media resource to the UE which initiates the service request, comprising allocating an idle state WEB browser;
the control module is further configured to: when establishing the media channel with the UE, negotiate an audio/video media type and an encoding type;
the WEB browser process module is further configured to: comprise audio/video data in the data captured on the WEB page; and
the WEB browser process module is configured to: after capturing the data of the WEB page, encapsulate the captured data of the WEB page into an RTP package according to the negotiated audio/video media type and encoding type and then send to the UE through the media channel.

7. The service development platform as claimed in claim 6, wherein,
the WEB browser process module is configured to: load the WEB page on the WEB browser allocated to the UE, capture the data of the WEB page on the WEB browser allocated to the UE, and send the key information of the UE to the WEB browser allocated to the UE;
the control module is configured to: establish the media channel with the UE according to the media resource allocated to the UE.

8. The service development platform as claimed in claim 6, wherein,
the control module is further configured to: after receiving a link establishment request sent from an application server, establish a link with the application server, carry out a signaling interaction with the UE which initiates the service request through the application server, allocate the media resource to the UE, establish the media channel, and negotiate the audio/video media type and the encoding type.

9. The service development platform as claimed in claim 8, wherein,
the control module is further configured to: when allocating the idle state WEB browser to the UE, maintain a corresponding relation between the UE and the allocated WEB browser;
the control module is configured to: after receiving a request of loading a WEB page corresponding to a service requested by the UE, which is sent from the application server, forward, according to the corresponding relation, the load request to the WEB browser allocated to the UE on the WEB browser process module, so that the WEB browser loads the WEB page corresponding to the service requested by the UE according to the request.

10. The service development platform as claimed in claim 6, wherein,
the WEB browser process module is further configured to: when running the WEB browser, hitch a system sound play function; and
the WEB browser process module is configured to: capture audio data by the system sound play function; and capture video data by carrying out screen copy on a screen area of the WEB page; or
wherein, the control module is further configured to: monitor a running state and a service state of the WEB browser running in the WEB browser process module, and when detecting that the running of the WEB browser is abnormal, restart the WEB browser; and when detecting that the service is overtime, release the occupied resource; or
wherein, the WEB browser process module is further configured to: receive audio and video data sent from the UE through the media channel, record the data and store to a local.

11. The service development platform as claimed in claim 6, wherein, the WEB browser process module comprises an audio data capturing unit, an audio data sending unit, an audio data buffering unit, a video data capturing unit, a video data sending unit, a video data buffering unit, and a receiving package processing unit, wherein,
the audio data capturing unit is configured to capture audio data on the WEB page;
the audio data buffering unit is configured to buffer the audio data captured by the audio data capturing unit;
the audio data sending unit is configured to: encapsulate the audio data buffered by the audio data buffering unit after encoding processing into an RTP data package, and then send to the UE through the media channel with the UE;
the video data capturing unit is configured to capture video data on the WEB page;
the video data buffering unit is configured to buffer the video data captured by the video data capturing unit;
the video data sending unit is configured to: encapsulate the video data buffered by the video data buffering unit after encoding processing into an RTP data package, and then send to the UE through the media channel with the UE; and
the receiving package processing unit is configured to: receive an operation information of the UE and send to the WEB browser in manner of a windows message, so as to perform the operation on the WEB page.

12. The service development platform as claimed in claim 11, wherein, the receiving package processing unit is further configured to: receive an instruction sent from the control module and send to the WEB browser; wherein, the instruction comprises an instruction of loading a WEB page corresponding to a service requested by the UE, an instruction of a WEB page corresponding to a service pause request of the UE, and an instruction of a WEB page corresponding to a service finish request of the UE; or
wherein, the service development platform further comprises a record unit, which is configured to record audio and video data sent from the UE and store to a local.

13. A service development system, comprising a video gateway, an application server, a WEB server, and a service development platform as claimed in any one of claims 6-12, wherein,
the application server is configured to: receive a service request of a user through the video gateway, judge a service type, establish a link with the service development platform, and send a request of loading a WEB page corresponding to a service requested by the UE to the service development platform;
the service development platform is configured to: carry out a signaling interaction with the UE through the application server, establish a media channel with the UE; interact with the WEB server, load the WEB page on a WEB browser according to the service request of the UE; capture data of the WEB page on the WEB browser, sends the data after encapsulation to the UE through the media channel; receive key information sent from the UE through the media channel, and send the key information of the UE to the WEB browser in manner of a windows message, so as to realize an operation on the WEB page; and
the WEB server is configured to provide the WEB page corresponding to the service requested by the user.

## Patentansprüche

1. Ein Dienstentwicklungsverfahren, umfassend: eine Dienstentwicklungsplattform, die eine Dienstanfrage einer Benutzereinheit (UE) verarbeitet,
wobei die UE Dienstzugangscodes wählt und die Dienstanfrage einleitet;
wobei die Dienstentwicklungsplattform einen Medienkanal mit der UE einrichtet;
wobei die Dienstentwicklungsplattform eine WEB-Seite auf einen WEB-Browser entsprechend der Dienstanfrage der UE lädt;
wobei die Dienstentwicklungsplattform die Daten der WEB-Seite im WEB-Browser erfasst und die erfassten Daten der WEB-Seite nach der Einkapselung über den Medienkanal an die UE sendet; und
wobei die Dienstentwicklungsplattform die Schlüsselinformationen der UE über den Medienkanal empfängt und die Schlüsselinformationen der UE in Form einer Windows-Nachricht an den WEB-Browser sendet, um eine Operation auf der WEB-Seite zu realisieren;
wobei eine Vielzahl von WEB-Browsern auf der Dienstentwicklungsplattform laufen;
das Verfahren ferner umfasst: dass die Dienstentwicklungsplattform der UE eine Medienressource zuweist, die Dienstanfrage initiiert, wobei der Schritt der Zuweisung die Zuweisung eines inaktiven WEB-Browsers an die UE umfasst;
dass bei der Einrichtung des Medienkanals mit der UE die Dienstentwicklungsplattform weiter einen Audio-/Videomedientyp und einen Codierungstyp aushandelt; und
die von der Dienstentwicklungsplattform erfassten Daten der WEB-Seite Audio-/Videodaten umfassen; nach der Erfassung der Daten der WEB-Seite die Dienstentwicklungsplattform die erfassten Daten der WEB-Seite in ein RTP-Paket entsprechend dem ausgehandelten Audio-/Videomedientyp und der Codierungstyp einkapselt und sie dann über den Medienkanal an die UE sendet.

2. Verfahren nach Anspruch 1, wobei,
die Dienstentwicklungsplattform den Medienkanal mit der UE entsprechend der der UE zugewiesenen Medienressource einrichtet;
die Dienstentwicklungsplattform die WEB-Seite auf den der UE zugeordneten WEB-Browser lädt;
die Dienstentwicklungsplattform die Daten der WEB-Seite auf dem der UE zugeordneten WEB-Browser erfasst; und
die Dienstentwicklungsplattform die Schlüsselinformationen der UE an den der UE zugeordneten WEB-Browser sendet.

3. Verfahren nach Anspruch 1, ferner umfassend:
dass ein Anwendungsserver die Dienstanfrage der UE über ein Video-Gateway empfängt und dann eine Anfrage zur Einrichtung einer Verbindung mit der Dienstentwicklungsplattform initiiert;
dass die Dienstentwicklungsplattform eine Verbindung mit dem Anwendungsserver herstellt; und
dass die Dienstentwicklungsplattform über den Anwendungsserver eine Signalisierungsinteraktion mit der UE durchführt, die Medienressource der UE zuweist, den Medienkanal mit der UE einrichtet und den Audio-/Videomedientyp und den Codierungstyp aushandelt.

4. Verfahren nach Anspruch 3, wobei,
nach der Zuweisung des inaktiven WEB-Browsers an die UE, die Dienstentwicklungsplattform weiterhin eine entsprechende Verbindung zwischen der UE und dem WEB-Browser aufrechterhält; und
der Anwendungsserver ferner einen Diensttyp entsprechend der Dienstanfrage der UE beurteilt und eine Anfrage zum Laden einer WEB-Seite, die einem von der UE angefragten Dienst entspricht, an die Dienstentwicklungsplattform sendet, nachdem die Verbindung mit der Dienstentwicklungsplattform hergestellt wurde; und nach Erhalt der Anfrage zum Laden der WEB-Seite, die dem von der UE angefragten Dienst entspricht, die Dienstentwicklungsplattform entsprechend der entsprechenden Verbindung, die WEB-Seite, die dem von der UE angefragten Dienst entspricht, auf den der UE zugeordneten WEB-Browser lädt.

5. Verfahren nach Anspruch 1, wobei,
die Dienstentwicklungsplattform beim Ausführen des WEB-Browsers eine Systemtonwiedergabefunktion ankoppelt und die Dienstentwicklungsplattform Audiodaten durch die Systemtonwiedergabefunktion erfasst; und
die Dienstentwicklungsplattform Videodaten erfasst, indem sie eine Bildschirmaufnahme in einem Bildschirmbereich der WEB-Seite durchführt; oder
wobei die Dienstentwicklungsplattform ferner einen Betriebszustand und einen Dienstzustand des WEB-Browsers überwacht und, wenn sie feststellt, dass der Betrieb des WEB-Browsers anormal ist, den WEB-Browser neu startet; und wenn sie feststellt, dass der Dienst überfällig ist, die belegte Ressource freigibt; oder
wobei die Dienstentwicklungsplattform ferner eine Audio-/Videonachricht umfasst,
die Dienstentwicklungsplattform die von der UE gesendeten Audio- und Videodaten aufzeichnet und auf einem lokalen Speicher zu speichert; und die Audio- und Videodaten werden von der UE über den Medienkanal an die Dienstentwicklungsplattform gesendet.

6. Eine Dienstentwicklungsplattform, die ein Steuermodul und ein WEB-Browser-Prozessmodul umfasst, wobei,
das Steuermodul so konfiguriert ist, dass: ein Medienkanal mit einem Benutzergerät (UE) eingerichtet wird, das eine Dienstanfrage initiiert; und
das WEB-Browser-Prozessmodul ist so konfiguriert, dass es: eine WEB-Seite auf einen WEB-Browser entsprechend der Dienstanfrage der UE lädt; Daten der WEB-Seite im WEB-Browser erfasst und die erfassten Daten der WEB-Seite nach der Einkapselung über den vom Steuermodul eingerichteten Medienkanal an die UE sendet; und Schlüsselinformationen der UE über den Medienkanal empfängt und die Schlüsselinformationen der UE in Form einer Windows-Nachricht an den WEB-Browser sendet, um eine Operation auf der WEB-Seite zu realisieren;
wobei das WEB-Browser-Prozessmodul ferner so konfiguriert ist, dass es eine Vielzahl von WEB-Browsern ausführt;
das Steuermodul so konfiguriert ist, dass es: der UE, die die Dienstanfrage initiiert, eine Medienressource zuweist, was die Zuweisung eines inaktiven WEB-Browsers umfasst;
das Steuermodul ferner so konfiguriert ist, dass es bei der Einrichtung des Medienkanals mit der UE einen Audio-/Videomedientyp und einen Codierungstyp aushandelt;
das WEB-Browser-Prozessmodul weiter konfiguriert ist, um: Audio-/Videodaten in den auf der WEB-Seite erfassten Daten zu enthalten; und
das WEB-Browser-Prozessmodul konfiguriert ist, um: nach der Erfassung der Daten der WEB-Seite die erfassten Daten der WEB-Seite in ein RTP-Paket entsprechend dem ausgehandelten Audio-/Videomedientyp und dem Kodierungstyp einzukapseln und dann über den Medienkanal an die UE zu senden.

7. Dienstentwicklungsplattform nach Anspruch 6, wobei,
das WEB-Browser-Prozessmodul so konfiguriert ist, dass es: die WEB-Seite in dem der UE zugeordneten WEB-Browser lädt, die Daten der WEB-Seite in dem der UE zugeordneten WEB-Browser erfasst und die Schlüsselinformationen der UE an den der UE zugeordneten WEB-Browser sendet;
das Steuermodul so konfiguriert ist, dass es: den Medienkanal mit der UE entsprechend der der UE zugeordneten Medienressource herstellt.

8. Dienstentwicklungsplattform nach Anspruch 6, wobei,
das Steuermodul ist ferner so konfiguriert, dass es nach dem Empfang einer von einem Anwendungsserver gesendeten Verbindungsaufbauanfrage eine Verbindung mit dem Anwendungsserver herstellt, eine Signalisierungsinteraktion mit der UE durchführt, die die Dienstanfrage durch den Anwendungsserver initiiert, die Medienressource der UE zuweist, den Medienkanal herstellt und den Audio-/Videomedientyp und den Codierungstyp aushandelt.

9. Dienstentwicklungsplattform nach Anspruch 8, wobei,
das Steuermodul ferner so konfiguriert ist, dass es bei der Zuweisung des inaktiven WEB-Browsers an die UE eine entsprechende Verbindung zwischen der UE und dem zugewiesenen WEB-Browser aufrechterhält;
das Steuermodul so konfiguriert ist, dass: nach Empfang einer Anfrage zum Laden einer WEB-Seite, die einem von der UE angefragten Dienst entspricht und vom Anwendungsserver gesendet wird, die Lade-Anfrage gemäß der entsprechenden Verbindung an den WEB-Browser weitergeleitet wird, der der UE auf dem WEB-Browser-Prozessmodul zugeordnet ist, so dass der WEB-Browser die WEB-Seite lädt, die dem von der UE angeforderten Dienst gemäß der Anfrage entspricht.

10. Dienstentwicklungsplattform nach Anspruch 6, wobei,
das WEB-Browser-Prozessmodul weiter konfiguriert ist, um: beim Ausführen des WEB-Browsers eine Systemtonwiedergabefunktion anzukoppeln; und
das WEB-Browser-Prozessmodul so konfiguriert ist, dass es: Audiodaten durch die Systemtonwiedergabefunktion erfasst; und Videodaten durch Ausführen einer Bildschirmaufnahme in einem Bildschirmbereich der WEB-Seite erfasst; oder
wobei das Steuermodul ferner konfiguriert ist um: einen Betriebszustand und einen Dienstzustand des im WEB-Browser-Prozessmodul laufenden WEB-Browsers zu überwachen und, wenn festgestellt wird, dass der Betrieb des WEB-Browsers anormal ist, den WEB-Browser neu zu starten; und, wenn festgestellt wird, dass der Dienst überfällig ist, die belegte Ressource freizugeben; oder
wobei das WEB-Browser-Prozessmodul ferner konfiguriert ist um: Audio- und Videodaten, die von der UE über den Medienkanal gesendet werden, zu empfangen, die Daten aufzuzeichnen und auf einem lokalen Speicher zu speichern.

11. Dienstentwicklungsplattform nach Anspruch 6, wobei das WEB-Browser-Prozessmodul eine Audiodatenerfassungseinheit, eine Audiodatensendeeinheit, eine Audiodatenpuffereinheit, eine Videodatenerfassungseinheit, eine Videodatensendeeinheit, eine Videodatenpuffereinheit und eine Empfangspaketverarbeitungseinheit umfasst,
wobei die Audiodatenerfassungseinheit zur Erfassung von Audiodaten auf der WEB-Seite konfiguriert ist;
die Audiodatenpuffereinheit so konfiguriert ist, dass sie die von der Audiodatenerfassungseinheit erfassten Audiodaten puffert;
die Audiodatensendeeinheit so konfiguriert ist, dass sie: die von der Audiodatenpuffereinheit gepufferten Audiodaten nach der Codierungsverarbeitung in ein RTP-Datenpaket eingekapselt und dann über den Medienkanal mit der UE an die UE sendet;
die Videodatenerfassungseinheit so konfiguriert ist, dass sie Videodaten auf der WEB-Seite erfasst;
die Videodatenpuffereinheit so konfiguriert ist, dass sie die von der Videodatenerfassungseinheit erfassten Videodaten puffert;
die Videodatensendeeinheit so konfiguriert ist, dass sie: die von der Videodatenpuffereinheit gepufferten Videodaten nach der Codierungsverarbeitung in ein RTP-Datenpaket einkapselt und dann über den Medienkanal mit der UE an die UE sendet; und
die empfangende Paketverarbeitungseinheit so konfiguriert ist, dass sie: eine Operationsinformation der UE empfängt und in Form einer Windows-Nachricht an den WEB-Browser sendet, um die Operation auf der WEB-Seite durchzuführen.

12. Dienstentwicklungsplattform nach Anspruch 11, wobei die empfangende Paketverarbeitungseinheit ferner so konfiguriert ist, dass sie: eine vom Steuermodul gesendete Anweisung empfängt und an den WEB-Browser sendet; wobei die Anweisung eine Anweisung zum Laden einer WEB-Seite, die einem von der UE angefragten Dienst entspricht, eine Anweisung einer WEB-Seite, die einer Dienstpausenanfrage der UE entspricht, und eine Anweisung einer WEB-Seite, die einer Dienstbeendigungsanfrage der UE entspricht, umfasst; oder
wobei die Dienstentwicklungsplattform ferner eine Aufzeichnungseinheit umfasst, die so konfiguriert ist, dass sie Audio- und Videodaten aufzeichnet, die von der UE gesendet werden, und auf einem lokalen Speicher speichert.

13. Ein Dienstentwicklungssystem, das ein Video-Gateway, einen Anwendungsserver, einen WEB-Server und eine Dienstentwicklungsplattform gemäß einem der Ansprüche 6-12 umfasst, wobei,
der Anwendungsserver so konfiguriert ist, dass er: eine Dienstanfrage eines Benutzers über das Videogateway empfängt, einen Diensttyp bewertet, eine Verbindung mit der Dienstentwicklungsplattform herstellt und eine Anfrage zum Laden einer WEB-Seite, die einem von der UE angefragten Dienst entspricht, an die Dienstentwicklungsplattform sendet;
die Dienstentwicklungsplattform so konfiguriert ist, dass sie: eine Signalisierungsinteraktion mit der UE über den Anwendungsserver durchzuführen, einen Medienkanal mit der UE einzurichten; mit dem WEB-Server zu interagieren, die WEB-Seite auf einen WEB-Browser entsprechend der Dienstanfrage der UE zu laden; Daten der WEB-Seite im WEB-Browser zu erfassen, die Daten nach der Einkapselung über den Medienkanal an die UE zu senden; Schlüsselinformationen zu empfangen, die von der UE über den Medienkanal gesendet werden, und die Schlüsselinformationen der UE in Form einer Windows-Nachricht an den WEB-Browser zu senden, um eine Operation auf der WEB-Seite zu realisieren; und
der WEB-Server so konfiguriert ist, dass er die WEB-Seite zur Verfügung stellt, die dem vom Benutzer angefragten Dienst entspricht.

## Revendications

1. Un procédé de développement de services, comprenant : une plate-forme de développement de services traitant une demande de service d'un équipement d'utilisateur (UE),
l'UE en composant les codes d'accès au service, et en initiant la demande de service ;
la plate-forme de développement de services établissant un canal médiatique avec l'UE ;
la plate-forme de développement de services chargeant une page WEB sur un navigateur WEB selon la demande de service de l'UE ;
la plate-forme de développement de services saisissant les données de la page WEB sur le navigateur WEB et envoyant les données saisies de la page WEB après encapsulation à l'UE par le canal médiatique ; et
la plate-forme de développement de services recevant les informations clés de l'UE par le canal médiatique, et envoyant les informations clés de l'UE au navigateur WEB sous la forme d'un message Windows, afin de réaliser une opération sur la page WEB ;
dans lequel, une pluralité de navigateurs WEB fonctionnent sur la plate-forme de développement de services ;
le procédé comprend en outre : la plate-forme de développement de services allouant une ressource médiatique à l'UE qui initie la demande de service, dans lequel l'étape d'allocation comprend l'allocation d'un navigateur WEB inactif à l'UE ;
lorsque la plate-forme de développement de services établit le canal médiatique avec l'UE, elle négocie en outre un type de média audio/vidéo et un type de codage ; et
les données de la page WEB capturées par la plate-forme de développement de services comprennent des données audio/vidéo ; après avoir capturé les données de la page WEB, la plate-forme de développement de services encapsule les données capturées de la page WEB dans un paquet RTP selon le type de média audio/vidéo négocié et le type de codage, puis les envoie à l'UE par le canal médiatique.

2. Procédé selon la revendication 1, dans lequel,
la plate-forme de développement de services établit le canal médiatique avec l'UE selon la ressource médiatique allouée à l'UE ;
la plate-forme de développement de services charge la page WEB sur le navigateur WEB attribué à l'UE ;
la plate-forme de développement de services saisit les données de la page WEB sur le navigateur WEB attribué à l'UE ; et
la plate-forme de développement de services envoie les informations clés de l'UE au navigateur WEB attribué à l'UE.

3. Procédé selon la revendication 1, comprenant en outre :
un serveur d'application recevant la demande de service de l'UE via une passerelle vidéo, puis initiant une demande d'établissement de liaison vers la plate-forme de développement de services ;
la plate-forme de développement de services établissant une liaison avec le serveur d'application ; et
la plate-forme de développement de services effectuant une interaction de signalisation avec l'UE par le serveur d'application, allouant la ressource médiatique à l'UE, établissant le canal médiatique avec l'UE et négociant le type de média audio/vidéo et le type de codage.

4. Procédé selon la revendication 3, dans lequel,
après avoir attribué le navigateur WEB inactif à l'UE, la plate-forme de développement de services maintient en outre une relation correspondante entre l'UE et le navigateur WEB ; et
le serveur d'application évalue en outre un type de service selon la demande de service de l'UE, et envoie une demande de chargement d'une page WEB correspondant à un service demandé par l'UE à la plate-forme de développement de services après avoir établi la liaison avec la plate-forme de développement de services ; et après avoir reçu la demande de chargement de la page WEB correspondant au service demandé par l'UE, la plate-forme de développement de services, selon la relation correspondante, charge la page WEB correspondant au service demandé par l'UE sur le navigateur WEB attribué à l'UE.

5. Procédé selon la revendication 1, dans lequel,
la plate-forme de développement de services se connecte à une fonction de lecture sonore du système lorsque le navigateur WEB fonctionne, et la plate-forme de développement de services capture les données audio par la fonction de lecture sonore du système ; et
la plate-forme de développement de services capture des données vidéo en effectuant une copie d'écran sur une zone de la page WEB ; ou
dans lequel, la plate-forme de développement de services surveille en outre un état de fonctionnement et un état de service du navigateur WEB, et lorsqu'elle détecte que le fonctionnement du navigateur WEB est anormal, elle redémarre le navigateur WEB ; et lorsqu'elle détecte que le service est en surtemps, elle libère la ressource occupée ; ou
dans lequel, la plate-forme de développement de services comprend en outre un message audio/vidéo,
la plate-forme de développement de services enregistre les données audio et vidéo envoyées par l'UE et les stocke dans un local ; et les données audio et vidéo sont envoyées à la plate-forme de développement de services par l'UE via le canal médiatique.

6. Une plate-forme de développement de services, comprenant un module de contrôle et un module de traitement de navigateur WEB, dans laquelle,
le module de contrôle est configuré pour : établir un canal médiatique avec un équipement d'utilisateur (UE) qui initie une demande de service ; et
le module de traitement du navigateur WEB est configuré pour : charger une page WEB sur un navigateur WEB conformément à la demande de service de l'UE ; capturer les données de la page WEB sur le navigateur WEB, et envoyer les données capturées de la page WEB après encapsulation à l'UE par le canal médiatique établi par le module de contrôle ; et recevoir les informations clés de l'UE par le canal médiatique, et envoyer les informations clés de l'UE au navigateur WEB sous la forme d'un message Windows, afin de réaliser une opération sur la page WEB ;
dans lequel le module de traitement du navigateur WEB est en outre configuré pour faire fonctionner une pluralité de navigateurs WEB ;
le module de contrôle est configuré pour : allouer une ressource médiatique à l'UE qui initie la demande de service, comprenant l'allocation d'un navigateur WEB inactif ;
le module de contrôle est en outre configuré pour : lorsque établissant le canal médiatique avec l'UE, négocier un type de média audio/vidéo et un type de codage ;
le module de traitement du navigateur WEB est en outre configuré pour : inclure des données audio/vidéo dans les données saisies sur la page WEB ; et
le module de traitement du navigateur WEB est configuré pour : après avoir capturé les données de la page WEB, encapsuler les données capturées de la page WEB dans un paquet RTP selon le type de média audio/vidéo négocié et le type de codage, puis les envoyer à l'UE par le canal médiatique.

7. Plate-forme de développement de services selon la revendication 6, dans laquelle,
le module de traitement du navigateur WEB est configuré pour : charger la page WEB sur le navigateur WEB attribué à l'UE, saisir les données de la page WEB sur le navigateur WEB attribué à l'UE, et envoyer les informations clés de l'UE au navigateur WEB attribué à l'UE ;
le module de contrôle est configuré pour : établir le canal médiatique avec l'UE selon la ressource médiatique allouée à l'UE.

8. La plate-forme de développement de services selon la revendication 6, dans laquelle,
le module de contrôle est en outre configuré pour : après avoir reçu une demande d'établissement de liaison envoyée par un serveur d'application, établir une liaison avec le serveur d'application, effectuer une interaction de signalisation avec l'UE qui initie la demande de service par le serveur d'application, attribuer la ressource médiatique à l'UE, établir le canal médiatique, et négocier le type de média audio/vidéo et le type de codage.

9. La plate-forme de développement de services selon la revendication 8, dans laquelle,
le module de contrôle est en outre configuré pour : lorsque le navigateur WEB à l'état inactif est alloué à l'UE, maintenir une relation correspondante entre l'UE et le navigateur WEB alloué ;
le module de contrôle est configuré pour : après avoir reçu une demande de chargement d'une page WEB correspondant à un service demandé par l'UE, qui est envoyée par le serveur d'application, transmettre, selon la relation correspondante, la demande de chargement au navigateur WEB attribué à l'UE sur le module de traitement du navigateur WEB, de sorte que le navigateur WEB charge la page WEB correspondant au service demandé par l'UE selon la demande.

10. La plate-forme de développement de services selon la revendication 6, dans laquelle,
le module de processus du navigateur WEB est en outre configuré pour : lorsque le navigateur WEB est actif, activer une fonction de lecture sonore du système ; et
le module de traitement du navigateur WEB est configuré pour : capturer des données audio par la fonction de lecture sonore du système ; et capturer des données vidéo en effectuant une copie d'écran sur une zone de la page WEB ; ou
dans lequel, le module de contrôle est en outre configuré pour : surveiller un état de fonctionnement et un état de service du navigateur WEB fonctionnant dans le module de processus du navigateur WEB, et lorsque détectant que le fonctionnement du navigateur WEB est anormal, redémarrer le navigateur WEB ; et lorsque détectant que le service est en surtemps, libérer la ressource occupée ; ou
dans lequel, le module de traitement du navigateur WEB est en outre configuré pour : recevoir les données audio et vidéo envoyées par l'UE via le canal médiatique, enregistrer les données et les stocker dans un local.

11. La plate-forme de développement de services selon la revendication 6, dans laquelle le module de traitement du navigateur WEB comprend une unité de capture de données audio, une unité d'envoi de données audio, une unité de mise en mémoire tampon de données audio, une unité de capture de données vidéo, une unité d'envoi de données vidéo, une unité de mise en mémoire tampon de données vidéo et une unité de traitement de paquets de réception,
dans lequel, l'unité de capture de données audio est configurée pour capturer des données audio sur la page WEB ;
l'unité de mise en mémoire tampon des données audio est configurée pour mettre en mémoire tampon les données audio capturées par l'unité de capture des données audio ;
l'unité d'envoi de données audio est configurée pour : encapsuler les données audio mises en mémoire tampon par l'unité de mise en mémoire tampon des données audio après le traitement de codage dans un paquet de données RTP, puis les envoyer à l'UE par le canal médiatique avec l'UE ;
l'unité de capture de données vidéo est configurée pour capturer des données vidéo sur la page WEB ;
l'unité de mise en mémoire tampon des données vidéo est configurée pour mettre en mémoire tampon les données vidéo capturées par l'unité de capture des données vidéo ;
l'unité d'envoi des données vidéo est configurée pour : encapsuler les données vidéo mises en mémoire tampon par l'unité de mise en mémoire tampon des données vidéo après le traitement de codage dans un paquet de données RTP, puis les envoyer à l'UE par le canal médiatique avec l'UE
l'unité de traitement de paquets de réception est configurée pour : recevoir une information d'opération de l'UE et l'envoyer au navigateur WEB sous la forme d'un message Windows, de manière à effectuer l'opération sur la page WEB.

12. Plate-forme de développement de services selon la revendication 11, dans laquelle l'unité de traitement de paquets de réception est en outre configurée pour : recevoir une instruction envoyée par le module de contrôle et l'envoyer au navigateur WEB ; dans laquelle l'instruction comprend une instruction de chargement d'une page WEB correspondant à un service demandé par l'UE, une instruction d'une page WEB correspondant à une demande de pause de service de l'UE, et une instruction d'une page WEB correspondant à une demande de fin de service de l'UE ; ou
dans laquelle, la plate-forme de développement de services comprend en outre une unité d'enregistrement, qui est configurée pour enregistrer les données audio et vidéo envoyées par l'UE et les stocker dans un local.

13. Un système de développement de services, comprenant une passerelle vidéo, un serveur d'application, un serveur WEB et une plate-forme de développement de services, comme indiqué dans l'une quelconque des revendications 6 à 12, dans lequel,
le serveur d'application est configuré pour : recevoir une demande de service d'un utilisateur via la passerelle vidéo, évaluer un type de service, établir une liaison avec la plate-forme de développement de services, et envoyer une demande de chargement d'une page WEB correspondant à un service demandé par l'UE à la plate-forme de développement de services ;
la plate-forme de développement de services est configured to : effectuer une interaction de signalisation avec l'UE par le serveur d'application, établir un canal médiatique avec l'UE ; interagir avec le serveur WEB, charger la page WEB sur un navigateur WEB conformément à la demande de service de l'UE ; capturer les données de la page WEB sur le navigateur WEB, envoyer les données après encapsulation à l'UE par le canal médiatique; recevoir les informations clés envoyées par l'UE par le canal médiatique, et envoyer les informations clés de l'UE au navigateur WEB sous forme de message Windows, de manière à réaliser une opération sur la page WEB ; et
le serveur WEB est configuré pour fournir la page WEB correspondant au service demandé par l'utilisateur.
